# EUROPÄISCHE PATENTANMELDUNG

(11) **EP 3 767 933 A1**
(43) Veröffentlichungstag der Anmeldung: **20.01.2021**
(21) Anmeldenummer: 19186957.7
(22) Anmeldetag: 18.07.2019
(51) Int. Cl.: H04N 1/401, H04N 1/407, B41J 2/21

(54) **DUMC MIT 2D-SHADINGKORREKTUR**

(71) Anmelder: Heidelberger Druckmaschinen AG, 69115 Heidelberg (DE)
(72) Erfinder: Mayer, Martin, 68526 Ladenburg (DE); Trachanas, Ilias, Dr., 68723 Plankstadt (DE); Schoemann, Andreas, 69123 Heidelberg (DE)

(57) **Zusammenfassung**

Verfahren zur Kompensation von Dichteschwankungen in den Druckköpfen (5) einer Inkjet-Druckmaschine (7) durch einen Rechner (6), wobei der Rechner (6) Kompensationsprofile (11) für die Dichteschwankungen erstellt, anwendet und im Rahmen der Erstellung der Kompensationsprofile (11) eine zweidimensionale Shading-Korrektur durchführt, wobei die zweidimensionale Shading-Korrektur in Quer- (13) und Druckrichtung der Inkjet-Druckmaschine (7) durchgeführt wird, welches dadurch gekennzeichnet ist, dass die erstellten Kompensationsprofile (11) nur von der Querrichtung (13) der Inkjet-Druckmaschine (7) und von der Flächendeckung eines von den Druckköpfen (5) zu erzeugenden Druckbildes abhängig sind.

## Beschreibung

Die vorliegende Erfindung betrifft ein Verfahren zur Kompensation von Dichteschwankungen in Druckköpfen einer Inkjet-Druckmaschine unter Einbezug einer zweidimensionalen Shadingkorrektur.

Die Erfindung liegt im technischen Gebiet des Inkjetdrucks.

Beim Einsatz von Inkjetdruckköpfen in Inkjet-Druckmaschinen ist stets zu berücksichtigen, dass sich diese Inkjetdruckköpfe auch bei komplett identischen Druckkopf-Modellen in ihrem Druckbild stets geringfügig unterscheiden. Dies liegt an fertigungsbedingten Toleranzen, Unterschieden in der Tintenversorgung etc. D.h. selbst für den Fall, dass alle Druckdüsen eines Inkjetdruckkopfes korrekt, d.h. innerhalb der Spezifikationen, funktionieren, gibt es geringfügige Schwankungen im Tintenausstoß von Druckdüse zu Druckdüse, die sich wiederum von Inkjetdruckkopf zu Inkjetdruckkopf unterscheiden. Damit insbesondere bei sehr hohen Druckqualitäten bzw. Druckauflösungen diese sogenannten Dichteschwankungen in den Druckköpfen nicht zu sichtbaren Abweichungen oder gar Artefakten in den erzeugten Druckbildern führen, müssen diese entsprechend kompensiert werden. Dafür werden normalerweise mittels Testdrucken Intensitätsprofile über die gesamte Druckkopfbreite der verwendeten Druckköpfe erstellt, welche genau anzeigen, wie sich die Dichteschwankungen über den entsprechenden Druckkopf verteilen. Aus diesen Intensitätsprofilen können dann Kompensationsprofile erstellt werden, welche für jede Druckdüse des entsprechenden Druckkopfes genau angeben, wieviel er zur Erreichung einer bestimmten Flächendeckung auf dem Drucksubstrat mehr oder weniger drucken muss, um die jeweiligen Dichteschwankungen im Inkjetdruckkopf auszugleichen. Da für diesen Vorgang eine digitale Aufnahme des erzeugten Testdruckes mittels eines Kamerasystems notwendig ist, muss natürlich auch sichergestellt sein, dass das entsprechende Kamerasystem hinreichend genau funktioniert. Daher wird eine sogenannte Shadingkorrektur durchgeführt, welche Ungleichmäßigkeiten in der Beleuchtung des zu erfassenden Testdruckbildes, sowie beeinflussende Kamerasensitivitäten oder sonstige Einflüsse der Kamera bzw. Kameraoptik auf das Kamerabild korrigieren. Diese Shadingkorrektur wird normalerweise eindimensional durchgeführt. Das bedeutet, es wird über die gesamte Breite des Kamerabildes, mit welchem das später zu erzeugende Testdruckmuster erfasst werden soll, das unbedruckte Drucksubstrat erfasst und Abweichungen im so entstehenden Kamerabild vom bekannten Helligkeitswert des verwendeten Drucksubstrates mittels der Shadingkorrektur entfernt. Die Korrektur dieser Abweichungen wird dann auf die entsprechend bedruckten Bereiche, welche ebenfalls mittels des Kamerasystems erfasst werden, übertragen, um so für bestimmte definierte Flächendeckungen die Shadingeffekte ebenfalls zu beseitigen. Da dies üblicherweise nur über einen sehr schmalen Bereich über die gesamte Breite des Kamerabildes geschieht, spricht man von einer eindimensionalen Shadingkorrektur.

Falls das verwendete Drucksubstrat allerdings nur eine sehr geringe Opazität aufweist, sprich der sich unter dem Drucksubstrat befindliche Hintergrund durchscheint, und somit das Kamerabild beeinflusst, stößt dieses eindimensionale Shadingkorrekturverfahren an Grenzen. Denn der durchscheinende Hintergrund ist nicht über das gesamte erfasste Kamerabild homogen, sondern kann sich verändern. Bei einer eindimensionalen Shadingkorrektur werden dann jedoch nur die Durchscheineffekte, die an der Stelle des schmalen Bereichs des Kamerabildes, welcher für die Shadingkorrektur ausgewertet wird, kompensiert. In Bereichen, wo der Einfluss des Untergrundes von jenem im erfassten eindimensionalen Shadingkorrekturbereich abweicht, kommt es dann zu einer unzureichenden oder gar kontraproduktiven Shadingkorrektur.

Aus der US-Patentschrift US 9 902 179 B2 ist diesbezüglich ein Verfahren bekannt, welches versucht den Einfluss des Hintergrundes durch eine zweidimensionale Dichtekompensation zu reduzieren. Dies schließt auch eine zweidimensionale Shading-Korrektur mit ein. Allerdings stellt das hier vorgestellte Verfahren nicht auf die Kompensation von Shading-Effekten, aufgrund eines durchscheinenden Hintergrunds bei geringer Opazität des Bedruckstoffs ab. Es geht hier vor allem um die ein unterschiedliches Druckverhalten, welches durch Wärmeunterschiede im Bedruckstoff verursacht wird, die von einem inhomogenen Untergrund herrühren. Daher wird hier mit der Shading-Korrektur entsprechend eine zweidimensionale Dichtekompensation berechnet und durchgeführt. Dies ist allerdings ein sehr aufwändiges Verfahren, da hier für viele verschiedene y-Positionen auf dem Drucksubstrat, also Positionen in Druckrichtung, Kompensationsprofile in x-, also Querrichtung ermittelt, verwaltet und angewendet werden müssen. Die zweidimensionalen Shading-Effekte aufgrund geringer Opazität des Bedruckstoffs lassen sich mit diesem Verfahren dagegen nicht beheben.

Aufgabe der vorliegenden Erfindung ist daher, ein Verfahren zur Kompensation von Dichteschwankungen in Druckköpfen einer Inkjet-Druckmaschine zu offenbaren, welches mit einer verbesserten und effizienteren Form der Shadingkorrektur arbeitet und somit auch für Bedruckstoffe mit geringer Opazität verwendet werden kann.

Gelöst wird diese Aufgabe durch ein Verfahren zur Kompensation von Dichteschwankungen in den Druckköpfen einer Inkjet-Druckmaschine durch einen Rechner, wobei der Rechner Kompensationsprofile für die Dichteschwankungen erstellt, anwendet und im Rahmen der Erstellung der Kompensationsprofile eine zweidimensionale Shading-Korrektur durchführt, wobei die zweidimensionale Shading-Korrektur in Quer- und Druckrichtung der Inkjet-Druckmaschine durchgeführt wird und welches dadurch gekennzeichnet ist, dass die erstellten Kompensationsprofile nur von der Querrichtung der Inkjet-Druckmaschine und von der Flächendeckung eines von den Druckköpfen zu erzeugenden Druckbildes abhängig sind. Dies hat den Vorteil, dass es nicht erforderlich ist, für unterschiedliche Positionen in Druckrichtung im erfassten Kamerabild unterschiedliche Kompensationsprofile zu ermitteln, zu verwalten und anzuwenden. Dies wäre mit einem sehr großen Aufwand verbunden, so wie wir es auch im genannten Stand der Technik der zweidimensionalen Shadingkorrektur im Fuji-Verfahren sehen. Im hier vorliegenden erfindungsgemäßen Verfahren sind dagegen die erstellten Kompensationsprofile nur von der Querrichtung der Inkjet-Druckmaschine abhängig, was für den Zweck des erfindungsgemäßen Verfahrens zur Kompensation von Durchscheineffekten bei Bedruckstoffen mit geringer Opazität völlig ausreicht. Selbstverständlich werden die Kompensationsprofile für mehrere Flächendeckungen berechnet, womit sie dementsprechend auch von der Flächendeckung abhängig sind.

Vorteilhafte, daher bevorzugte Weiterbildungen dieser Erfindung ergeben sich aus den zugehörigen Unteransprüchen sowie aus der Beschreibung und den zugehörigen Zeichnungen.

Eine bevorzugte Weiterbildung des erfindungsgemäßen Verfahrens ist dabei, dass für die zweidimensionale Shading-Korrektur eine Aufnahme mindestens eines gesamten, unbedruckten Druckbogens mittels mindestens eines Bildsensors und eine und Auswertung des aufgenommenen Druckbogens durch den Rechner durchgeführt wird. Damit die sich verändernden Durchscheineffekte im erzeugten Kamerabild für die zweidimensionale Shadingkorrektur auch alle erfasst werden, muss natürlich mindestens ein gesamter unbedruckter Druckbogen erfasst und entsprechend ausgewertet werden.

Eine weitere bevorzugte Weiterbildung des erfindungsgemäßen Verfahrens ist dabei, dass die zweidimensionale Shading-Korrektur selbst in Abhängigkeit der Quer- und Druckrichtung der Inkjet-Druckmaschine durchgeführt wird, bei der Erstellung der Kompensationsprofile jedoch nur die Querrichtung berücksichtigt wird. Dies ist ein wichtiger Punkt bzgl. der Unterscheidung zwischen Shadingkorrektur und Kompensation der Dichteschwankungen. Die zweidimensionale Shadingkorrektur muss selbstverständlich in Abhängigkeit der quer und in Druckrichtung in der Inkjet-Druckmaschine verlaufenden Druckbogen durchgeführt werden, da nur so die sich in Druckrichtung verändernden Durchscheineffekte bei geringer Opazität von Bedruckstoffen entsprechend vollständig entfernt werden können. Die eigentlichen Kompensationsprofile, die aus den Intensitätsprofilen erstellt werden, berücksichtigen jedoch jeweils nur die Querrichtung, da die einzelnen Druckdüsen der Druckköpfe, deren Soll-Ansteuerstärke ja die Kompensationsprofile angeben, selbstverständlich im Druckkopf nur quer zur Druckrichtung ausgerichtet sind. Anders als im Stand der Technik wird auch nicht versucht, für unterschiedliche Bereiche auf dem Drucksubtrat in Druckrichtung unterschiedliche Kompensationsprofile anzuwenden, da es anders als im Stand der Technik nicht darum geht, sich in Druckrichtung verändernde Effekte auf dem Drucksubstrat auszugleichen, sondern stattdessen die optischen Durchscheineffekte des Hintergrundes bei der Shadingkorrektur im erfassten Kamerabild.

Eine weitere bevorzugte Weiterbildung des erfindungsgemäßen Verfahrens ist dabei, dass zur Erstellung der Kompensationsprofile vom Rechner jeweils zuerst mindestens ein Intensitätsprofil erstellt wird, welches die Dichteschwankungen in den Druckköpfen abbildet, wobei die zweidimensionale Shading-Korrektur ein Teil des Prozesses zur Erstellung der Intensitätsprofile ist. Die Shadingkorrektur wird dabei nach Aufnahme des Kamerabildes, aber vor der Berechnung der Intensitätsprofile, durchgeführt. Damit können die bereits erwähnten optischen Störeffekte im Kamerabild entfernt werden, so dass für die Erstellung der Intensitätsprofile auch wirklich nur die reinen Dichteschwankungen der Druckköpfe verwendet werden und eben nicht optische Störeffekte in Form des Shadings diesen Prozess beeinflussen.

Eine weitere bevorzugte Weiterbildung des erfindungsgemäßen Verfahrens ist dabei, dass die zweidimensionale Shading-Korrektur sowohl für den unbedruckten Substrathintergrund als auch für verschiedene, zu druckende Flächendeckungen durchgeführt wird. Dabei werden zuerst mittels des aufgenommenen, gesamten unbedruckten Druckbogens die auftretenden Shadingeffekte erfasst, diese dann für unbedruckten Substrathintergrund entsprechend korrigiert und dann für verschiedene Flächendeckungen die gefundenen Shadingeffekte ebenfalls korrigiert.

Eine weitere bevorzugte Weiterbildung des erfindungsgemäßen Verfahrens ist dabei, dass zur Erstellung der Kompensationsprofile für jede zu druckende Flächendeckung ein Intensitätsprofil erstellt wird. Aus den verschiedenen Intensitätsprofilen wird dann in Abhängigkeit von den zu druckenden Flächendeckungen im Druckauftrag für jeden Druckkopf ein entsprechendes Kompensationsprofil erstellt.

Eine weitere bevorzugte Weiterbildung des erfindungsgemäßen Verfahrens ist dabei, dass mittels der zweidimensionalen Shading-Korrektur, neben der Beseitigung von Ungleichmäßigkeiten in der Beleuchtung und der Kamera-Sensitivität, vor allem der Einfluss des Untergrundes bei Bedruckstoffen mit geringer Opazität beseitigt wird. Dies sind die hauptsächlichen Effekte, welche mit dem erfindungsgemäßen Verfahren zur zweidimensionalen Shadingkorrektur beseitigt werden sollen. Das Verfahren an sich eignet sich darüber hinaus zur Beseitigung sämtlicher, über den gesamten Bereich des Kamerabildes auftretender Störeinflüsse, welche die Erstellung der notwendigen Kompensationsprofile beeinflussen können.

Die Erfindung als solche sowie konstruktiv und funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind aneinander entsprechende Elemente mit jeweils denselben Bezugszeichen versehen.

Die Zeichnungen zeigen:
- Figur 1:: den Aufbau einer verwendeten Bogen-Inkjet-Druckmaschine
- Figur 2:: den Ablauf des erfindungsgemäßen Verfahrens zur Erstellung von Kompensationsprofilen
- Figur 3:: Intensitätsprofile für verschiedene Flächendeckungen ohne Shading-Korrektur
- Figur 4:: Intensitätsprofile für verschiedene Flächendeckungen mit Shading-Korrektur
- Figur 5:: den Shading-Effekt des Durchscheinens des Substratuntergrunds bei unbedrucktem Bogen im Stand der Technik mit 1D-Shading-Korrektur
- Figur 6:: den Shading-Effekt des Durchscheinens des Substratuntergrunds bei bedrucktem Bogen mit verschiedenen Flächendeckungen
- Figur 7:: die erfindungsgemäße Aufnahme des gesamten Druckbogens mit 2D-Shading-Korrektur zur Berechnung des Kompensationsprofils

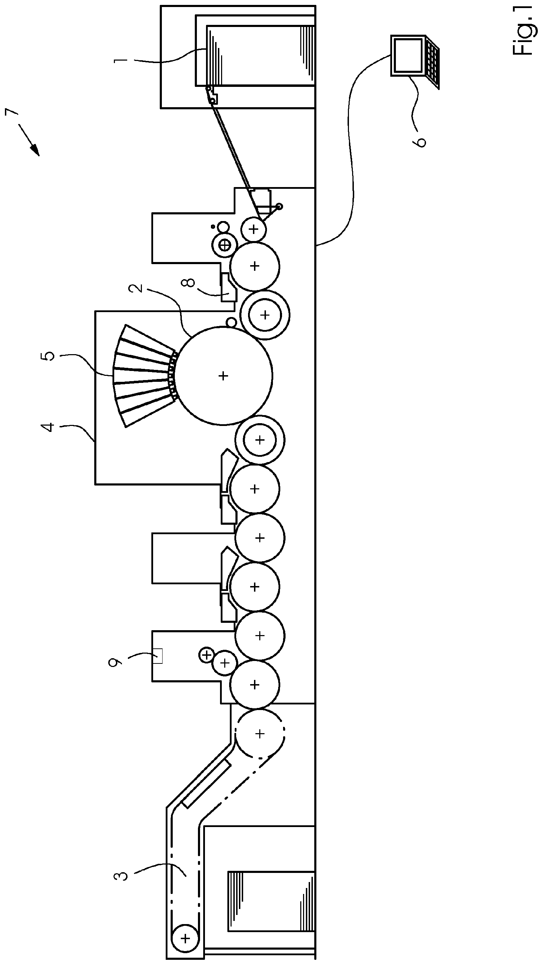

Das Anwendungsgebiet des erfindungsgemäßen Verfahrens ist eine Inkjet-Druckmaschine 7. Ein Beispiel für den grundlegenden Aufbau einer solchen Maschine 7, bestehend aus Anleger 1 für die Zufuhr des Drucksubstrats 2 über ein Precoatwerk 8 in das Druckwerk 4, wo es von den Druckköpfen 5 bedruckt wird, bis hin zum Ausleger 3, ist in Figur 1 dargestellt. Dabei handelt es sich hier um eine Bogen-Inkjet-Druckmaschine 7, welche von einem Steuerungsrechner 6 kontrolliert wird. Zusätzlich kann auch ein Inline-Bilderfassungssystem vorhanden sein, dessen Kamerasystem 9 nach dem letzten Druckkopf 5 positioniert ist.

Der Kern des erfindungsgemäßen Verfahrens liegt nun darin, den Einfluss einer geringen Opazität von Bedruckstoffen 17, 21 bei der Shading-Korrektur, welche bei der Profilberechnung von Intensitäts- 10, bzw. Kompensationsprofilen 11 angewandt wird zu berücksichtigen. Dabei ist das resultierende Kompensationsprofil 11 stets nur von der x-Position 13, d.h. quer zur Druckrichtung, abhängig. Für unterschiedliche y-Positionen auf dem Bedruckstoff 17, 21, also in Druckrichtung, sind keine unterschiedlichen Kompensationsprofile 11 mehr erforderlich. Mit dem Verfahren kann somit die Beschränkung auf Bedruckstoffe mit Mindestdicke entfallen oder reduziert werden.

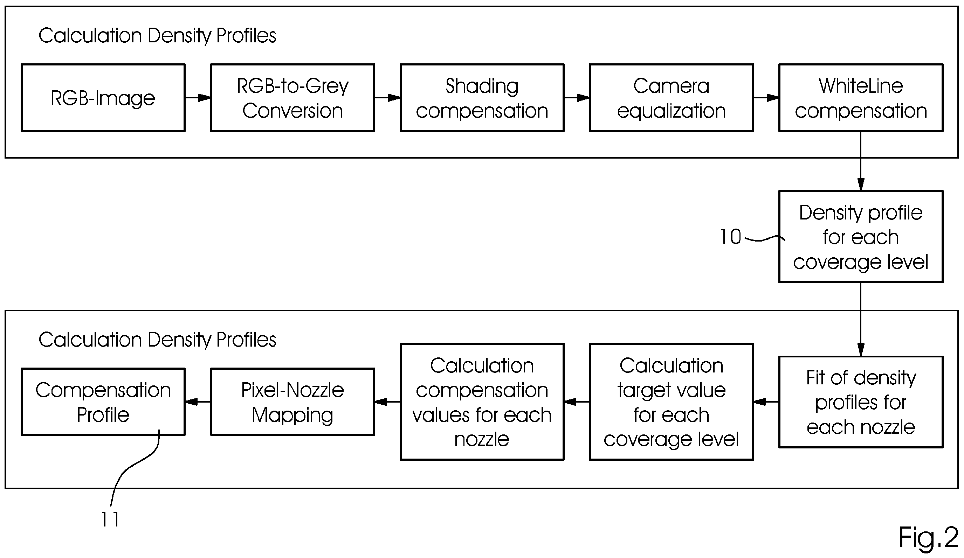

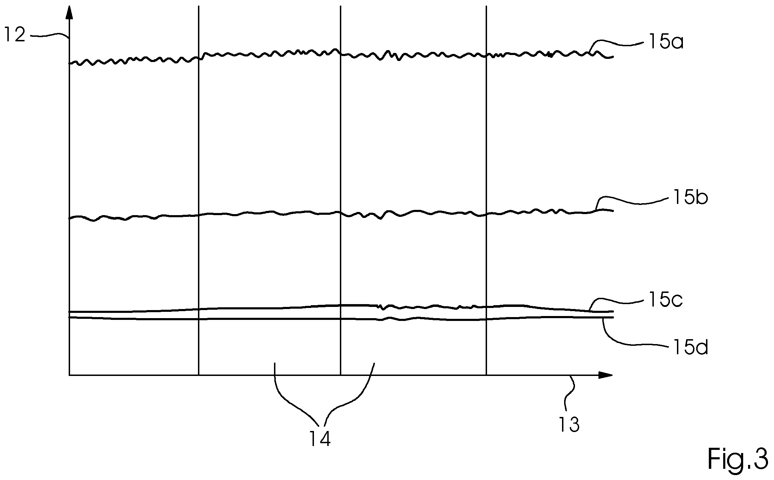

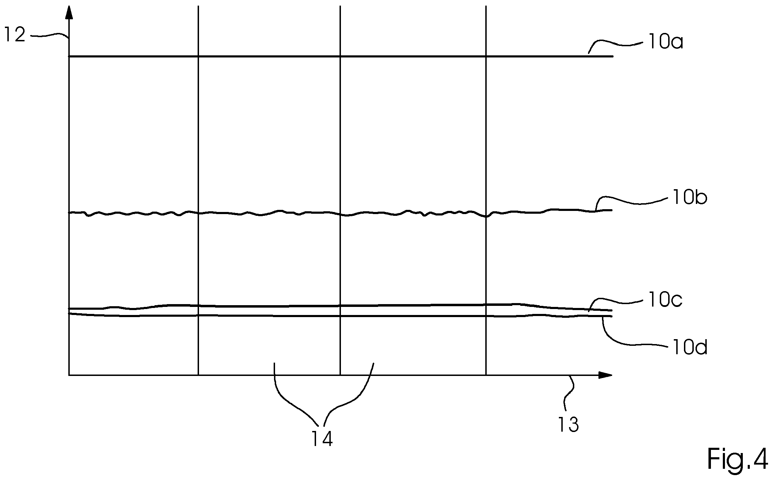

Figur 2 zeigt ein Beispiel des Ablaufs zur Berechnung von Kompensationsprofilen 11 zum Ausgleich der auftretenden Dichteschwankungen. Die Shading-Korrektur ist dabei nur ein Unterpunkt, allerdings ein Wichtiger. In Figur 3 wird ein Beispiel eines Intensitätsprofils 15a, 15b, 15c, 15d in einem Diagramm, welches die Helligkeitswerte 11 in Abhängigkeit von der Querrichtung 13, also der Länge des betreffenden Druckkopfes 5, gezeigt, welches durch Shading-Effekte entsprechend verzerrt ist. Die Querrichtung wird dabei durch verschiedene Kameras in Bereiche 14 aufgeteilt. Im Diagramm wird sowohl ein theoretisches "Intensitätsprofil" 15a für das Substrat, als auch die realen, korrespondierenden Intensitätsprofile 15b, 15c, 15d für verschiedene Flächendeckungswerte angezeigt; in diesem Beispiel für jeweils 30%, 70% und 100% Flächendeckung. Ersteres 15a weist, da unbedruckt und nur der helle Substrathintergrund aufscheint, logischerweise die höheren Helligkeitswerte 12 auf. Man sieht gut, wie mit steigender Flächendeckung 15b, 15c, 15d die Auswirkung der Shading-Effekte abnehmen. Auch ist zu erkennen, dass die Shading-Effekte auf dem unbedruckten Substrat 15a zu Abweichungen führen, die Dichteschwankungen ähneln, obwohl ohne Druck natürlich real gar keine solchen Dichteschwankungen auftreten. Die Shading_Effekte verzerren und verdecken damit die eigentlich relevanten Dichteschwankungen, womit die Intensitätsprofile 15b, 15c, 15d für die verschiedenen Flächendeckungen unbrauchbar werden. Eine Shading-Korrektur ist somit erforderlich. Figur 4 zeigt dementsprechend das gleiche Intensitätsprofil 10 nach der Shading-Korrektur. Während hier für die verschiedenen Flächendeckungswerte 30%, 70%, 100% in den entsprechenden Intensitätsprofilen 10b, 10c, 10d somit nur noch die echten Dichteschwankungen ohne Shading-Effekte erscheinen, sind für das unbedruckte Substrat hier natürlich keine "Dichteschwankungen" im theoretischen "Intensitätsprofil" 10a mehr ersichtlich.

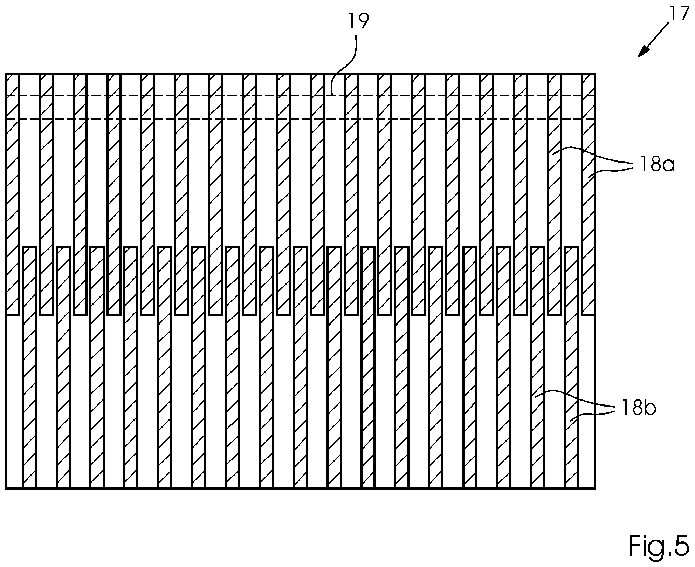

Bei einer geringen Opazität von Bedruckstoffen, führt dies nun dazu, dass bei inhomogenem Hintergrund sich dieser Hintergrund bei Aufnahme des Druckbildes mit einer Kamera 9 insbesondere in unbedruckten Bildbereichen stark im Kamerabild 17 abzeichnet. Im bedruckten Bildbereichen nimmt der Einfluss des Untergrundes 18a, 18b bereits bei geringen Dichten sehr stark ab. Gut ist dieser Sachverhalt anhand eines Beispiels in Figur 5 dargestellt. In diesem Beispiel verursachen Zinken 18a, 18b zum Bogentransport diesen inhomogenen Hintergrund. Im Stand der Technik wird zur Korrektur von Ungleichmäßigkeiten in der Beleuchtung und der Kamera-Sensitivität eine Shading-Korrektur durchgeführt, bei der das Intensitätsprofil einer Tonwertwertfläche 15b, 15c, 15d mit dem Intensitätsprofil einer unbedruckten Referenzfläche kalibriert wird. Dazu wird im Allgemeinen als Referenzfläche das Intensitätsprofil auf einer unbedruckten Substratfläche verwendet. Dies entspricht einer eindimensionalen Shading Korrektur und ist ebenfalls in Figur 5 zu erkennen. Bei Bedruckstoffen mit geringer Opazität und einem in Druckrichtung veränderlichen Hintergrund wird aber mit einer eindimensionalen Shading-Korrektur das Intensitätsprofil der Tonwertfläche 15b, 15c, 15d falsch kompensiert, da die Shading-Korrektur stets von dem Hintergrund der Zinken 18a, 18b in der eindimensionalen Region of Interest (ROI) 19 der Referenzfläche ausgeht, der Hintergrund sich weiter unten in Druckrichtung aber verändert.

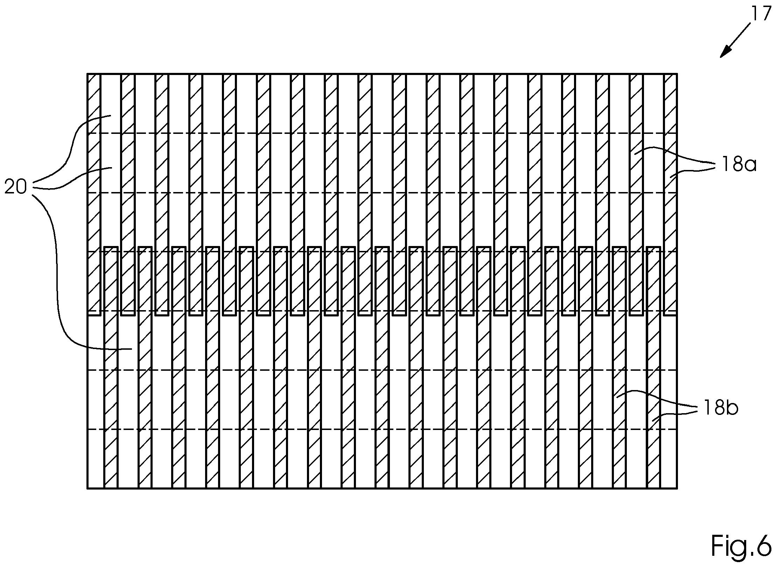

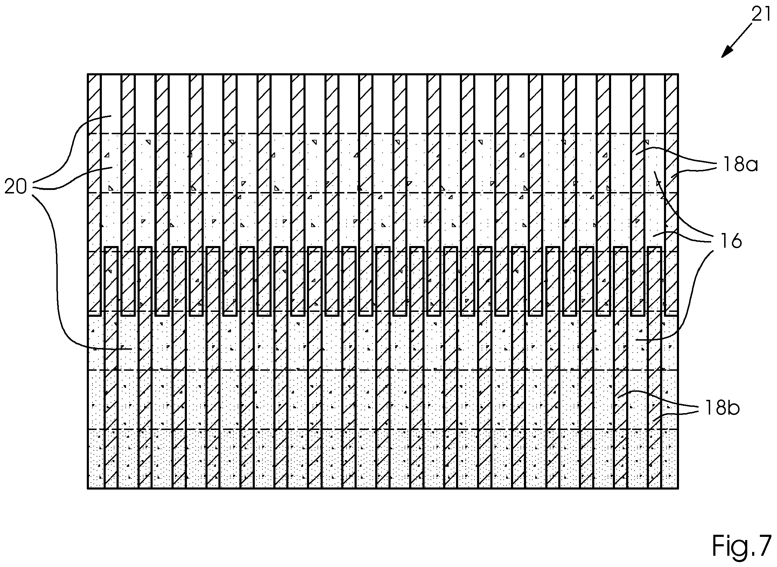

Dieses Problem wird erfindungsgemäß durch einen Einsatz einer zweidimensionalen Shading-Korrektur umgangen: Hier wird von einem oder mehreren Bogen des gesamten, unbedruckten Substrats das Kamera-Bild 17 aufgenommen und eine von x- und y-Richtung, also Quer- und in Druckrichtung, abhängige, zweidimensionale Shading-Korrektur für das Signal des unbedruckten Bogens 10a berechnet. Figur 6 zeigt diesen Vorgang für das genannte Beispiel an. Man sieht gut verschiedenen ROIs 20 für die zweidimensionale Shading-Korrektur, die sich über den gesamten Bogen erstrecken und somit auch den veränderlichen Hintergrund in Form der Zinken 18a, 18b erfassen. Als nächster Schritt werden dann auch die realen Intensitätsprofile 10b, 10c, 10d der Tonwertfläche um diese erfassten Hintergrundeffekte der durchscheinenden Zinken 18a, 18b bereinigt. Figur 7 zeigt dies für das gebrachte Beispiel mit den verschiedenen Flächendeckungen 16 in Form des mit verschiedenen Flächendeckungen bedruckten, durchscheinenden Druckbogens 21 an. Auch hier ist ersichtlich, dass der "Durchschein-Hintergrund"-Shading-Effekt umso stärker, und damit die Shading-Korrektur umso wichtiger ist, je geringer die aufgebrachte Flächendeckung 16 ist.

Danach wird aus den so erzeugten Intensitätsprofilen 10b, 10c, 10d, wie in Figur 2 erläutert, ein resultierendes Kompensationsprofil 11 für jeden Druckkopf 5 erzeugt, dem Steuerungsrechner 6 der Inkjet-Druckmaschine 7 zur Verfügung gestellt und im Druck von diesem angewandt. Die auf Basis der entsprechend korrigierten Intensitätsprofile 10b, 10c, 10d erstellten resultierenden Kompensationsprofile 11 sind dann nur von der Querposition 13 abhängig. D.h. es ist, anders als im Stand der Technik nicht erforderlich, bzw. gewollt für die unterschiedlichen Positionen in Druckrichtung unterschiedliche Kompensationsprofile 11 zu ermitteln, zu verwalten und anzuwenden.

### Bezugszeichenliste

- 1: Anleger
- 2: aktuelles Drucksubstrat / aktueller Druckbogen
- 3: Ausleger
- 4: Inkjet-Druckwerk
- 5: Inkjet-Druckkopf
- 6: Rechner
- 7: Inkjet-Druckmaschine
- 8: Precoatwerk
- 9: Bildsensor / Kamerasystem
- 10: shadingkompensierte Intensitätsprofile für verschiedene Flächendeckungen
- 10a: Intensitätsprofil für Substrat mit Shadingkompensation
- 10b: Intensitätsprofil für 30% Flächendeckung mit Shadingkompensation
- 10c: Intensitätsprofil für 70% Flächendeckung mit Shadingkompensation
- 10d: Intensitätsprofil für 100% Flächendeckung mit Shadingkompensation
- 11: erstelltes Kompensationsprofil
- 12: Helligkeitswert
- 13: Druckbreite des Druckkopfes, Querrichtung
- 14: verschiedene Kamerabereiche
- 15a: Intensitätsprofil für Substrat ohne Shadingkompensation
- 15b: Intensitätsprofil für 30% Flächendeckung ohne Shadingkompensation
- 15c: Intensitätsprofil für 70% Flächendeckung ohne Shadingkompensation
- 15d: Intensitätsprofil für 100% Flächendeckung ohne Shadingkompensation
- 16: verschiedene Flächendeckungen
- 17: durchscheinender, unbedruckter Druckbogen
- 18a: erste Bogentransportzinken
- 18b: zweite Bogentransportzinken
- 19: eindimensionale "Region of Interest" (ROI)
- 20: zweidimensionale "Regions of Interest" (ROIs)
- 21: mit verschiedenen Flächendeckungen bedruckter, durchscheinender Druckbogen

## Patentansprüche

1. Verfahren zur Kompensation von Dichteschwankungen in den Druckköpfen (5) einer Inkjet-Druckmaschine (7) durch einen Rechner (6), wobei der Rechner (6) Kompensationsprofile (11) für die Dichteschwankungen erstellt, anwendet und im Rahmen der Erstellung der Kompensationsprofile (11) eine zweidimensionale Shading-Korrektur durchführt, wobei die zweidimensionale Shading-Korrektur in Quer- (13) und Druckrichtung der Inkjet-Druckmaschine (7) durchgeführt wird,
**dadurch gekennzeichnet,**
**dass** die erstellten Kompensationsprofile (11) nur von der Querrichtung (13) der Inkjet-Druckmaschine (7) und von der Flächendeckung eines von den Druckköpfen (5) zu erzeugenden Druckbildes abhängig sind.

2. Verfahren nach Anspruch 1,
**dadurch gekennzeichnet,**
**dass** für die zweidimensionale Shading-Korrektur eine Aufnahme mindestens eines gesamten, unbedruckten Druckbogens (21) mittels mindestens eines Bildsensors (9) und eine und Auswertung des aufgenommenen Druckbogens (21) durch den Rechner (6) durchgeführt wird.

3. Verfahren nach einem der vorherigen Ansprüche,
**dadurch gekennzeichnet,**
**dass** die zweidimensionale Shading-Korrektur selbst in Abhängigkeit der Quer- (13) und Druckrichtung der Inkjet-Druckmaschine (7) durchgeführt wird, bei der Erstellung der Kompensationsprofile (11) jedoch nur die Querrichtung (13) berücksichtigt wird.

4. Verfahren nach einem der vorherigen Ansprüche,
**dadurch gekennzeichnet,**
**dass** zur Erstellung der Kompensationsprofile (11) vom Rechner (6) jeweils zuerst mindestens ein Intensitätsprofil (10a, 10b, 10c, 10d) erstellt wird, welches die Dichteschwankungen in den Druckköpfen (5) abbildet, wobei die zweidimensionale Shading-Korrektur ein Teil des Prozesses zur Erstellung der Intensitätsprofile (10a, 10b, 10c, 10d) ist.

5. Verfahren nach einem der vorherigen Ansprüche,
**dadurch gekennzeichnet,**
**dass** die zweidimensionale Shading-Korrektur sowohl für den unbedruckten Substrathintergrund (17) als auch für verschiedene zu druckende Flächendeckungen (16) durchgeführt wird.

6. Verfahren nach Anspruch 4 und 5,
**dadurch gekennzeichnet,**
**dass** zur Erstellung der Kompensationsprofile (11) für jede zu druckende Flächendeckung (16) ein Intensitätsprofil (10b, 10c, 10d) erstellt wird.

7. Verfahren nach einem der vorherigen Ansprüche,
**dadurch gekennzeichnet,**
**dass** mittels der zweidimensionalen Shading-Korrektur, neben der Beseitigung von Ungleichmäßigkeiten in der Beleuchtung und der Kamera-Sensitivität, vor allem der Einfluss des Untergrundes bei Bedruckstoffen mit geringer Opazität (17, 21) beseitigt wird.

## Geänderte Patentansprüche

### Geänderte Patentansprüche gemäss Regel 137(2) EPÜ.

1. Verfahren zur Kompensation von Dichteschwankungen in den Druckköpfen (5) einer Inkj et-Druckmaschine (7) durch einen Rechner (6), wobei der Rechner (6) Kompensationsprofile (11) für die Dichteschwankungen erstellt, anwendet, wobei er im Rahmen der Erstellung der Kompensationsprofile (11) eine zweidimensionale Shading-Korrektur durchführt und wobei er die zweidimensionale Shading-Korrektur in Quer-(13) und Druckrichtung der Inkjet-Druckmaschine (7) durchführt,
**dadurch gekennzeichnet,**
**dass** der Rechner die Kompensationsprofile (11) so erstellt, dass sie nur von der Querrichtung (13) der Inkjet-Druckmaschine (7) und von der Flächendeckung eines von den Druckköpfen (5) zu erzeugenden Druckbildes abhängig sind.

2. Verfahren nach Anspruch 1,
**dadurch gekennzeichnet,**
**dass** für die zweidimensionale Shading-Korrektur eine Aufnahme mindestens eines gesamten, unbedruckten Druckbogens (21) mittels mindestens eines Bildsensors (9) und eine und Auswertung des aufgenommenen Druckbogens (21) durch den Rechner (6) durchgeführt wird.

3. Verfahren nach einem der vorherigen Ansprüche,
**dadurch gekennzeichnet,**
**dass** die zweidimensionale Shading-Korrektur selbst in Abhängigkeit der Quer- (13) und Druckrichtung der Inkjet-Druckmaschine (7) durchgeführt wird, bei der Erstellung der Kompensationsprofile (11) jedoch nur die Querrichtung (13) berücksichtigt wird.

4. Verfahren nach einem der vorherigen Ansprüche,
**dadurch gekennzeichnet,**
**dass** zur Erstellung der Kompensationsprofile (11) vom Rechner (6) jeweils zuerst mindestens ein Intensitätsprofil (10a, 10b, 10c, 10d) erstellt wird, welches die Dichteschwankungen in den Druckköpfen (5) abbildet, wobei die zweidimensionale Shading-Korrektur ein Teil des Prozesses zur Erstellung der Intensitätsprofile (10a, 10b, 10c, 10d) ist.

5. Verfahren nach einem der vorherigen Ansprüche,
**dadurch gekennzeichnet,**
**dass** die zweidimensionale Shading-Korrektur sowohl für den unbedruckten Substrathintergrund (17) als auch für verschiedene zu druckende Flächendeckungen (16) durchgeführt wird.

6. Verfahren nach Anspruch 4 und 5,
**dadurch gekennzeichnet,**
**dass** zur Erstellung der Kompensationsprofile (11) für jede zu druckende Flächendeckung (16) ein Intensitätsprofil (10b, 10c, 10d) erstellt wird.

7. Verfahren nach einem der vorherigen Ansprüche,
**dadurch gekennzeichnet,**
**dass** mittels der zweidimensionalen Shading-Korrektur, neben der Beseitigung von Ungleichmäßigkeiten in der Beleuchtung und der Kamera-Sensitivität, vor allem der Einfluss des Untergrundes bei Bedruckstoffen mit geringer Opazität (17, 21) beseitigt wird.
